# EUROPEAN PATENT APPLICATION

(11) **EP 4 841 921 A1**
(43) Date of publication of application: **18.11.2026**
(21) Application number: 24916091.2
(22) Date of filing: 12.01.2024
(51) Int. Cl.: H04L 5/00, H04W 72/563

(54) **COMMUNICATION METHOD, FIRST NETWORK ELEMENT, SECOND NETWORK ELEMENT, COMMUNICATION SYSTEM AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); THOMAS, Emmanuel, Beijing 100085 (CN)
(74) Representative: Stöckeler, Ferdinand
(86) International application number: PCT/CN2024/072075
(87) International publication number: WO 2025/148025

(57) **Abstract**

The present disclosure relates to a communication method, a first network element, a second network element, a communication system and a storage medium. The method comprises: sending first information, wherein the first information is used for indicating a first data flow in a multiplexed data flow, and the first data flow corresponds to a first QoS flow. By means of the solution of the present disclosure, support for different QoS characteristics of a multiplexed data flow is realized.

## Description

### TECHNICAL FIELD

The present disclosure relates to the field of communication technology, and specifically to a communication method, a first network element, a second network element, a communication system, and a storage medium.

### BACKGROUND

In communication technologies such as 5th generation mobile networks (5G), mobile media services, online extended reality (XR), online games, video-based remote control of machines or drones, etc., are expected to contribute more and more traffic to a communication network.

At present, since extended reality and interactive media services have features of high throughput, low latency, and high reliability requirements, it is necessary to comprehensively consider the quality of service (QoS) features of different service data flows (SDFs) within the same service.

### SUMMARY

The embodiments of the present disclosure provide a communication method, a first network element, a second network element, a communication system, and a storage medium, so as to provide support for different quality of service (QoS) features of a multiplexed data flow.

According to a first aspect of the embodiments of the present disclosure, a communication method is provided. The communication method is performed by a first network element. The above communication method includes: sending first information, in which the first information indicates a first data flow in a multiplexed data flow, and the first data flow corresponds to a first QoS flow.

According to a second aspect of the embodiments of the present disclosure, a communication method is provided. The communication method is performed by a second network element. The above communication method includes: receiving first information, in which the first information indicates a first data flow in a multiplexed data flow, and the first data flow corresponds to a first QoS flow.

According to a third aspect of the embodiments of the present disclosure, a communication method is provided. The communication method is performed by a core network. The core network includes a first network element and a second network element. The above communication method includes: sending, by the first network element, first information to the second network element, in which the first information indicates a first data flow in a multiplexed data flow, and the first data flow corresponds to a first QoS flow.

According to a fourth aspect of the embodiments of the present disclosure, a first network element is provided. The first network element includes: a transceiver module, configured to send first information, in which the first information indicates a first data flow in a multiplexed data flow, and the first data flow corresponds to a first QoS flow.

According to a fifth aspect of the embodiments of the present disclosure, a second network element is provided. The second network element includes: a transceiver module, configured to receive first information, in which the first information indicates a first data flow in a multiplexed data flow, and the first data flow corresponds to a first QoS flow.

According to a sixth aspect of the embodiments of the present disclosure, a first network element is provided. The first network element includes: one or more processors, and a memory for storing instructions. When the instructions are executed by the first network element, the first network element is caused to implement the communication method according to the first aspect.

According to a seventh aspect of the embodiments of the present disclosure, a second network element is provided. The second network element includes: one or more processors, and a memory for storing instructions. When the instructions are executed by the second network element, the second network element is caused to implement the communication method according to the second aspect.

According to an eighth aspect of the embodiments of the present disclosure, a communication system is provided. The communication system includes a first network element and a second network element. The first network element is configured to implement the communication method according to the first aspect. The second network element is configured to implement the communication method according to the second aspect.

According to a ninth aspect of the embodiments of the present disclosure, a storage medium for storing instructions is provided. When the instructions are running on a communication device, the communication device is caused to perform the communication method according to any one of the first aspect to the third aspect.

According to a tenth aspect of the embodiments of the present disclosure, a program product is provided. When the program product is executed by a communication device, the communication device is caused to perform the communication method according to any one of the first aspect to the third aspect.

According to an eleventh aspect of the embodiments of the present disclosure, a computer program is provided. When the computer program is running on a computer, the computer is caused to perform the communication method according to any one of the first aspect to the third aspect.

According to a twelfth aspect of the embodiments of the present disclosure, a chip or a chip system is provided. The chip or the chip system includes a processing circuit. The processing circuit is configured to perform the communication method according to any one of the first aspect to the third aspect.

In the embodiments of the present disclosure, each data flow in the multiplexed data flow may be mapped to a corresponding QoS flow.

It should be understood that the above general description and the following detailed description are exemplary and explanatory only, and do not limit the embodiments of the present disclosure.

### BRIEF DESCRIPTION OF THE DRAWINGS

In order to more clearly illustrate the technical solution in the embodiments of the disclosure, the accompanying drawings to be used in the embodiments of the disclosure will be described below. The following drawings are only part embodiments of the present disclosure, and do not constitute a limitation on the protection scope of the present disclosure.
FIG. 1A is a schematic diagram of an architecture of a communication system according to the embodiments of the present disclosure.
FIG. 1B is a schematic diagram of an architecture of an implementation of a communication system according to the embodiments of the present disclosure.
FIG. 1C is a schematic diagram of an architecture of another implementation of a communication system according to the embodiments of the present disclosure.
FIG. 2A is an interaction diagram of a communication method according to the embodiments of the present disclosure.
FIG. 2B is an interaction diagram of a communication method according to the embodiments of the present disclosure.
FIG. 3A is a flowchart of a communication method according to the embodiments of the present disclosure.
FIG. 3B is a flowchart of a communication method according to the embodiments of the present disclosure.
FIG. 4A is a flowchart of a communication method according to the embodiments of the present disclosure.
FIG. 4B is a flowchart of a communication method according to the embodiments of the present disclosure.
FIG. 5 is an interaction diagram of a communication method according to the embodiments of the present disclosure.
FIG. 6A is an interaction diagram of an implementation of a communication method according to the embodiments of the present disclosure.
FIG. 6B is an interaction diagram of an implementation of a communication method according to the embodiments of the present disclosure.
FIG. 6C is an interaction diagram of an implementation of a communication method according to the embodiments of the present disclosure.
FIG. 7A is a block diagram of a first network element according to the embodiments of the present disclosure.
FIG. 7B is a block diagram of a second network element according to the embodiments of the present disclosure.
FIG. 8A is a block diagram of a communication device according to the embodiments of the present disclosure.
FIG. 8B is a block diagram of a chip according to the embodiments of the present disclosure.

### DETAILED DESCRIPTION

The embodiments of the present disclosure provide a communication method, a first network element, a second network element, a communication system, and a storage medium.

According to a first aspect, the embodiments of the present disclosure provide a communication method. The communication method is performed by a first network element. The above communication method includes: sending first information, in which the first information indicates a first data flow in a multiplexed data flow, and the first data flow corresponds to a first quality of service (QoS) flow.

According to the above embodiment, the first information may indicate the first data flow in the multiplexed data flow. Thus, the first information enables the first data flow to be identified during traffic detection and the first data flow to be routed/mapped to a corresponding first QoS flow. In this manner, it is possible to ensure that each data flow in the multiplexed data flow is mapped to its corresponding QoS flow, thereby supporting the different QoS features of the multiplexed data flow.

In some embodiments in combination with the first aspect, in some embodiments, the first information includes at least one of: first indication information, indicating an Internet protocol (IP) connection carrying the first data flow; second indication information, indicating an IP stream carrying the first data flow; or third indication information, indicating an IP frame carrying the first data flow.

According to the above embodiment, the first information may indicate one or more of an IP connection, an IP stream, or an IP frame. The first information enables the first data flow to be identified from at least one of three levels of the IP connection, the IP stream, and the IP frame, thus achieving traffic detection of different granularities.

In some embodiments in combination with the first aspect, in some embodiments, the first indication information may include a connection identifier (ID) of the IP connection, the second indication information may include a stream ID of the IP stream, and the third indication information includes a frame type of the IP frame.

In some embodiments in combination with the first aspect, in some embodiments, the first information further includes indication information of the first QoS flow.

According to the above embodiment, in addition to indicating the first data flow, the first information may further include the indication information of the first QoS flow. Thus, the first information may indicate that the first data flow is associated with the first QoS flow. In this way, after the first data flow is identified based on the first information, the first data flow may be mapped to the first QoS flow corresponding to the indication information, thereby achieving traffic mapping for the first data flow.

In some embodiments in combination with the first aspect, in some embodiments, the first information may be included in at least one of: a packet detection rule; or traffic detection information.

According to the above embodiment, the first information may be included in the packet detection rule or the traffic detection information. In this way, depending on the scenario, the first information may be included in different rules or information. This may enhance the applicability of transmission of the first information.

In some embodiments in combination with the first aspect, in some embodiments, the first information may be included in a packet filter set of the packet detection rule.

According to the above embodiment, the first information may be included in the packet filter set in the packet detection rule. In this way, information related to the traffic detection and processing of a data packet may be integrated together, which facilitates acquisition of the first information. In addition, by modifying the format of an existing packet filter set, sending of the first information may be achieved, which ensures the adaptability of the first information to existing specifications.

In some embodiments in combination with the first aspect, in some embodiments, the first information is sent to a second network element via an N4 interface; in which the first network element is configured to implement packet data unit (PDU) session management, and the second network element is configured to implement QoS processing.

In some embodiments in combination with the first aspect, in some embodiments, the first information may be sent via one of: an N4 association setup procedure; an N4 session establishment procedure; or an N4 session modification procedure.

In some embodiments in combination with the first aspect, in some embodiments, the above method may further include: receiving second information, in which the second information indicates QoS information.

In some embodiments in combination with the first aspect, in some embodiments, the second information includes at least one of: a QoS requirement, indicating a mapping requirement of the multiplexed data flow; or a QoS rule, indicating a mapping policy of the multiplexed data flow.

According to a second aspect, the embodiments of the present disclosure provide a communication method. The communication method is performed by a second network element. The above communication method includes: receiving first information, in which the first information indicates a first data flow in a multiplexed data flow, and the first data flow corresponds to a first QoS flow.

According to the above embodiment, the first information may indicate the first data flow in the multiplexed data flow. Thus, the first information enables the second network element to identify the first data flow during the traffic detection and to route/map the first data flow to a corresponding first QoS flow. In this way, it may be ensured that each data flow in the multiplexed data flow is mapped to its corresponding QoS flow, thus supporting the different QoS features of the multiplexed data flow.

In some embodiments in combination with the second aspect, in some embodiments, the first information may include at least one of: first indication information, indicating an IP connection carrying the first data flow; second indication information, indicating an IP stream carrying the first data flow; or third indication information, indicating an IP frame carrying the first data flow.

In some embodiments in combination with the second aspect, in some embodiments, the first indication information may include a connection ID of the IP connection, the second indication information may include a stream ID of the IP stream, and the third indication information may include a frame type of the IP frame.

In some embodiments in combination with the second aspect, in some embodiments, the first information may further include indication information of the first QoS flow.

In some embodiments in combination with the second aspect, in some embodiments, the first information may be included in at least one of: a packet detection rule; or traffic detection information.

In some embodiments in combination with the second aspect, in some embodiments, the first information may be included in a packet filter set of the packet detection rule.

In some embodiments in combination with the second aspect, in some embodiments, the first information may be received from a first network element via an N4 interface; in which the first network element is configured to implement PDU session management, and the second network element is configured to implement QoS processing.

In some embodiments in combination with the second aspect, in some embodiments, the first information may be sent via one of: an N4 association setup procedure; an N4 session establishment procedure; or an N4 session modification procedure.

In some embodiments in combination with the second aspect, in some embodiments, the above method may further include: determining, according to the first information, the first data flow from the multiplexed data flow; and determining that the first data flow is mapped to the first QoS flow.

In some embodiments in combination with the second aspect, in some embodiments, the first data flow may include at least one of: an IP connection, an IP stream, or an IP frame.

According to a third aspect, the embodiments of the present disclosure provide a communication method. The communication method is performed by a core network. The core network includes a first network element and a second network element. The above communication method includes: sending, by the first network element, first information to the second network element, in which the first information indicates a first data flow in a multiplexed data flow, and the first data flow corresponds to a first QoS flow.

According to a fourth aspect, the embodiments of the present disclosure provide a first network element. The first network element includes: a transceiver module, configured to send first information, in which the first information indicates a first data flow in a multiplexed data flow, and the first data flow corresponds to a first QoS flow.

In some embodiments in combination with the fourth aspect, in some embodiments, the first information may include at least one of: first indication information, indicating an IP connection carrying the first data flow; second indication information, indicating an IP stream carrying the first data flow; or third indication information, indicating an IP frame carrying the first data flow.

In some embodiments in combination with the fourth aspect, in some embodiments, the first indication information may include a connection ID of the IP connection, the second indication information may include a stream ID of the IP stream, and the third indication information may include a frame type of the IP frame.

In some embodiments in combination with the fourth aspect, in some embodiments, the first information may further include indication information of the first QoS flow.

In some embodiments in combination with the fourth aspect, in some embodiments, the first information may be included in at least one of: a packet detection rule; traffic detection information.

In some embodiments in combination with the fourth aspect, in some embodiments, the first information may be included in a packet filter set of the packet detection rule.

In some embodiments in combination with the fourth aspect, in some embodiments, the first information may be sent to the second network element via an N4 interface; where the first network element may be used to implement PDU session management, and the second network element may be used to implement QoS processing.

In some embodiments in combination with the fourth aspect, in some embodiments, sending of the first information may be implemented by one of the following: an N4 association setup procedure; an N4 session establishment procedure; an N4 session modification procedure.

In some embodiments in combination with the fourth aspect, in some embodiments, the transceiver module may be further configured to: receive second information, where the second information indicates QoS information.

In some embodiments in combination with the fourth aspect, in some embodiments, the second information may include at least one of: a QoS requirement, indicating a mapping requirement of the multiplexed data flow; a QoS rule, indicating a mapping policy of the multiplexed data flow.

According to a fifth aspect, the embodiments of the present disclosure provide a second network element. The second network element includes: a transceiver module configured to receive first information, where the first information indicates a first data flow in a multiplexed data flow, and the first data flow corresponds to a first QoS flow.

In some embodiments in combination with the fifth aspect, in some embodiments, the first information may include at least one of: first indication information, indicating an IP connection carrying the first data flow; second indication information, indicating an IP stream carrying the first data flow; third indication information, indicating an IP frame carrying the first data flow.

In some embodiments in combination with the fifth aspect, in some embodiments, the first indication information may include a connection ID of the IP connection, the second indication information may include a stream ID of the IP stream, and the third indication information may include a frame type of the IP frame.

In some embodiments in combination with the fifth aspect, in some embodiments, the first information may further include indication information of the first QoS flow.

In some embodiments in combination with the fifth aspect, in some embodiments, the first information may be included in at least one of: a packet detection rule; traffic detection information.

In some embodiments in combination with the fifth aspect, in some embodiments, the first information may be included in a packet filter set of the packet detection rule.

In some embodiments in combination with the fifth aspect, in some embodiments, the first information may be received from a first network element via an N4 interface; in which the first network element is configured to implement PDU session management, and the second network element is configured to implement QoS processing.

In some embodiments in combination with the second aspect, in some embodiments, the first information may be sent via one of: an N4 association setup procedure; an N4 session establishment procedure; or an N4 session modification procedure.

In some embodiments in combination with the second aspect, in some embodiments, the above method may further include: determining, according to the first information, the first data flow from the multiplexed data flow; and determining that the first data flow is mapped to the first QoS flow.

In some embodiments in combination with the second aspect, in some embodiments, the first data flow may include at least one of: an IP connection, an IP stream, or an IP frame.

According to a sixth aspect, the embodiments of the present disclosure provide a first network element. The first network element includes: one or more processors, and a memory storing instructions. When the instructions are executed by the first network element, the first network element is caused to implement the communication method according to any one of the first aspect and its possible implementations.

According to a seventh aspect, the embodiments of the present disclosure provide a second network element. The second network element includes: one or more processors, and a memory storing instructions. When the instructions are executed by the second network element, the second network element is caused to implement the communication method according to any one of the second aspect and its possible implementations.

According to an eighth aspect, the embodiments of the present disclosure provide a communication system. The communication system includes a first network element and a second network element. The first network element is configured to implement the communication method according to any one of the first aspect and its possible implementations. The second network element is configured to implement the communication method according to any one of the second aspect and its possible implementations.

According to a ninth aspect, the embodiments of the present disclosure provide a storage medium for storing instructions. When the instructions are running on a communication device, the communication device is caused to perform the communication method according to any one of the first aspect to the third aspect and their possible implementations.

According to a tenth aspect, the embodiments of the present disclosure provide a program product. When the program product is executed by a communication device, the communication device is caused to perform the communication method according to any one of the first aspect to the third aspect and their possible implementations.

According to an eleventh aspect, the embodiments of the present disclosure provide a computer program. When the computer program is running on a computer, the computer is caused to perform the communication method according to any one of the first aspect to the third aspect and their possible implementations.

According to a twelfth aspect, the embodiments of the present disclosure provide a chip or a chip system. The chip or the chip system includes a processing circuit. The processing circuit is configured to perform the communication method according to any one of the first aspect to the third aspect and their possible implementations.

It may be understood that the first network element, the second network element, the communication system, the storage medium, the program product, the computer program, the chip, and the chip system above are all used to perform the communication method provided by the embodiments of the present disclosure. Therefore, the beneficial effects that may be achieved by them may refer to the beneficial effects in the corresponding methods, and will not be repeated here.

The embodiments of the present disclosure provide a communication method, a first network element, a second network element, a communication system, and a storage medium. In some embodiments, terms such as communication method and information processing method may be used interchangeably, terms such as network element and information processing apparatus, and communication device may be used interchangeably, and terms such as information processing system and communication system may be used interchangeably.

The embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined; and, for another example, an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, the terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the terms such as "uplink" and "downlink" may also be replaced with the terms corresponding to the communication between the terminals (for example, "side"). For example, the uplink channel, the downlink channel, etc. may be replaced with the side channel, and the uplink, the downlink, etc. may be replaced with a sidelink.

In some embodiments, the terminal may be replaced with the access network device, the core network device, or the network device. In this case, the access network device, the core network device, or the network device may be set to have all or part of functions of the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

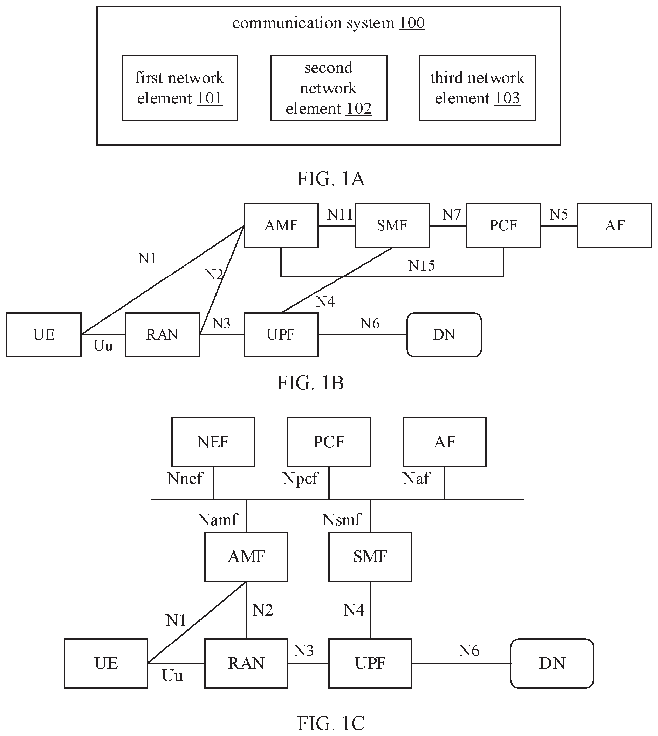

FIG. 1A is a schematic diagram of an architecture of a communication system according to the embodiments of the present disclosure. As shown in FIG. 1A, a communication system 100 includes a first network element 101, a second network element 102, and a third network element 103.

In some embodiments, part or all of the first network element 101, the second network element 102, and the third network element 103 may be located in a core network. The core network may be a single device in which the first network element 101, the second network element 102, the third network element 103, etc., are integrated, or may be a plurality of devices or device groups each including all or part of the first network element 101, the second network element 102, the third network element 103, etc. The core network may be virtual or physical. The core network includes, for example, at least one of an evolved packet core (EPC), a 5G core network (5GCN), or a next generation core (NGC).

In some embodiments, the first network element 101 may be, for example, a session management function (SMF).

In some embodiments, the first network element 101 may be used for functions such as session management, execution of control policies issued by a policy control function (PCF), selection of a user plane function (UPF), and IP address allocation of UE, and the name is not limited thereto.

In some embodiments, the second network element 102 may be, for example, an UPF.

In some embodiments, the second network element 102 may be used for functions such as user plane (UP) data forwarding, session/flow-based charging statistics, bandwidth limitation, and QoS processing of the UP, and the name is not limited thereto.

In some embodiments, the third network element 103 may be, for example, a PCF.

In some embodiments, the third network element 103 may be used to support a unified policy framework and provide policy rules, and the name is not limited thereto.

In some embodiments, the third network element 103 may be, for example, an access and mobility management function (AMF).

In some embodiments, the third network element 103 may be used to support a unified policy framework and provide policy rules, and the name is not limited thereto.

In some embodiments, the third network element 103 may be used for functions such as mobility management, non-access stratum mobility management (NAS MM) signaling processing, NAS session management (SM) signaling routing, security anchor and security context management, and the name is not limited thereto.

In some embodiments, the above communication system 100 may be a 5G communication system. It needs to be noted that the communication system 100 may also be other communication systems, for example, a 4G communication system or a 6G communication system, which is not specifically limited in the embodiments of the present disclosure.

FIG. 1B and FIG. 1C provide an illustrative description of the architecture of a communication system, using a 5G communication system as an example. Here, the terminal may be a UE, and the access network device may be a RAN.

FIG. 1B is a schematic diagram of an architecture of an implementation of a communication system according to the embodiments of the present disclosure. As shown in FIG. 1B, the architecture of the 5G communication system is presented in a reference point manner.

N1 is a reference point between the UE and the AMF. N2 is a reference point between the RAN and the AMF. N3 is a reference point between the RAN and the UPF. N4 is a reference point between the SMF and the UPF. N5 is a reference point between the PCF and the AF. N6 is a reference point between the UPF and a data network (DN). N7 is a reference point between the SMF and the PCF. N11 is a reference point between the AMF and the SMF. N15 is a reference point between the SMF and the PCF. Uu is an interface between the UE and the RAN.

It needs to be noted that a network exposure function (NEF) is not shown in FIG. 1B. However, each core network device in the communication system may interact with the NEF.

FIG. 1C is a schematic diagram of an architecture of another implementation of a communication system according to the embodiments of the present disclosure. As shown in FIG. 1C, the architecture of the 5G communication system is presented in a service-based interface manner.

Namf is a service-based interface provided by the AMF. Nsmf is a service-based interface provided by the SMF. Nnef is a service-based interface provided by the NEF. Npcf is a service-based interface provided by the PCF. Naf is a service-based interface provided by the AF.

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The embodiments of the present disclosure may be applied to the communication system 100 shown in FIG. 1A, or to some of the entities within the communication system 100, but are not limited herein. The entities shown in FIG. 1A are illustrative. The communication system 100 may include all or some of the entities shown in FIG. 1A, or may include other entities not shown in FIG. 1A. The number and form of the entities are arbitrary, each entity may be physical or virtual. The connection relationships between the entities are illustrative. The entities may or may not be connected to one another, and their connections may take any form, including direct or indirect, wired or wireless connections.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an Internet of Things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some cases, services such as mobile media services, online AR/VR and other XR services, online games, and video-based remote control of machines or drones are expected to contribute increasingly high traffic to the communication network. The XR services involve multimodal data flows. Multimodal data refers to data describing the same service/application that is input from the same device or different devices (including sensors), and this data may be output to one or more destination devices/terminals. The various data flows in the multimodal data often exhibit some degree of correlation, or even strong correlation, such as the synchronization of audio and video streams, or the synchronization of haptics and vision, etc. The data flows of such media services themselves, the relationships between the data flows, and the network transmission requirements of these service data flows (SDFs) all share certain common features. Effective identifying and utilizing these features will further facilitate network and services transmission and control, as well as enhance service assurance and user experience.

Further, XRM services and interactive media services require the communication system to comprehensively consider the QoS features of the SDF. The QoS feature includes, for example, at least one of: whether parameters such as a delay-critical guaranteed bit rate (GBR) data flow, a guaranteed flow bit rate (GFBR), a packet delay budget (PDB), and a maximum data burst volume (MDBV) may be simultaneously satisfied and coordinated consistently. This involves consistency guarantee of QoS authorization and execution for a plurality of XRM data streams from a single terminal as well as for XRM data streams from a plurality of terminals.

In some embodiments, PDU set-based processing may be supported for XRM SDFs, thus enhancing QoS awareness and guarantee for the SDF and enhancing the quality of experience (QoE) of the user.

In some embodiments, in systems such as 4G, 5G, 6G, and V2X, the AF may provide PDU set QoS parameters and a protocol description. In some embodiments, the PDU set QoS parameter may include at least one of: a PDU set delay budget (PSDB), a PDU set error rate (PSER), or PDU set integrated handling information (PSIHI). Then, the SMF and the UPF may extend a header of the PDU in the PDU set of the SDF in combination with the protocol description and protocol header extension provided by the AF, so as to carry PDU set information. The carried PDU information may be used by the access network for PDU set-based QoS control.

In some embodiments, the above PDU information may include at least one of: a PDU set sequence number, a starting PDU or an ending PDU of a PDU set, a PDU sequence number within a PDU set, a number of PDUs within a PDU set, PDU set importance, or a PDU set size. Here, the PDU set importance is used to represent the importance of the PDU set relative to other PDU sets in the same QoS flow.

It may be understood that the UPF performs mapping of the SDF to the QoS flow based on the PDR, and maps (which may also be referred to as encapsulation) associated PDUs into PDU sets. In addition, the UPF may adopt the same QoS policy for all PDU sets in the QoS flow. For example, the UPF may apply the same PDU set QoS parameters to all PDU sets in the QoS flow. In an example, the UPF may map an application flow to the QoS flow based on packet detection information in the PDR. Some PDUs in the QoS flow may be associated with media components (for example, intra-coded frames and predicted frames), and the UPF classifies these PDUs as belonging to the PDU set and performs corresponding control.

In some cases, the XRM service may be a multimedia type service, which corresponds to a plurality of data flows. These data flows may be multiplexed and transmitted in the same quintet. The quintet constitutes an end-to-end transport layer connection. In this case, one or more data flows multiplexed in the end-to-end transport layer connection (for example, a quintet) may be referred to as a multiplexed data flow. In an example, the quintet may be a quintet conforming to the quick UDP internet connections (QUIC) protocol. In some embodiments, for different data flows of the XRM service, there may be different QoS requirements. Then, different data flows may be transmitted using different QUIC connections or different QUIC streams. This requires a QoS architecture of the communication system to provide support for QoS classification in this scenario.

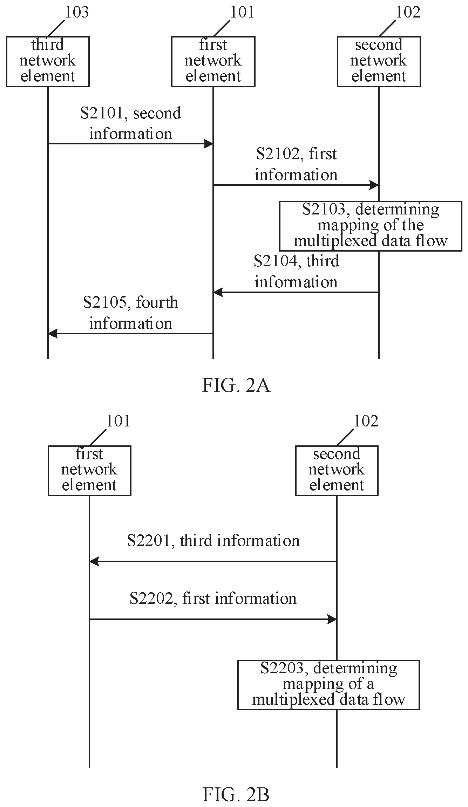

FIG. 2A is an interaction diagram of a communication method according to the embodiments of the present disclosure. The communication method involved in the embodiments of the present disclosure may be performed by the communication system 100. As shown in FIG. 2A, the communication method of the embodiments of the present disclosure includes the following steps at S2101 to S2105.

At S2101, a third network element 103 sends second information to a first network element 101.

In some embodiments, the first network element 101 receives the second information.

In some embodiments, the second information may include at least one of: a QoS requirement, or a QoS rule.

In some embodiments, the QoS requirement may indicate a mapping requirement of the multiplexed data flow.

In some embodiments, the QoS rule may indicate a mapping policy of the multiplexed data flow.

In some embodiments, the second information may be used to trigger the first network element 101 to establish or modify a PDU session.

In some embodiments, the second information may be used to trigger the first network element 101 to establish a new PDU session. In some embodiments, the second information may be used to trigger the first network element 101 to initiate a PDU session establishment procedure.

In some embodiments, the second information may be used to trigger the first network element 101 to modify an existing PDU session. In some embodiments, the second information may be used to trigger the first network element 101 to initiate a PDU session modification procedure.

In some embodiments, the third network element 103 may be an AMF. In some embodiments, the second information may be carried in an Nsmf_PDUSession_UpdateSMContext request.

In some embodiments, the third network element 103 may be a PCF. In some embodiments, the second information may be carried in an Npcf_SMPolicyControl_UpdateNotify request.

At S2102, the first network element 101 sends first information to a second network element 102.

In some embodiments, the second network element 102 may receive the first information.

In some embodiments, the first information may indicate a first data flow in the multiplexed data flow. The first data flow corresponds to a first QoS flow.

In some embodiments, the first information may be used to identify the first data flow in the multiplexed data flow.

In some embodiments, the first information may be used for traffic detection and/or routing of the first data in the multiplexed data flow.

In some embodiments, the name of the first information is not limited, and for example, it may be identification information, recognition information, packet filter indication information, etc.

In some embodiments, the multiplexed data flow may be an IP data flow. In an example, the multiplexed data flow may be in the form of the QUIC connection or the QUIC stream.

In some embodiments, the multiplexed data flow may include a plurality of levels. In an example, the multiplexed data flow may include the following three levels: an IP connection, an IP stream, and an IP frame. An IP connection may include one or more IP streams. An IP stream may include one or more IP frames.

In some embodiments, the first information may include at least one of: first indication information, second indication information, or third indication information.

In some embodiments, the first indication information may indicate the IP connection carrying the first data flow.

In some embodiments, the first indication information may include a connection ID of the IP connection carrying the first data flow. In an example, the first indication information may include a connection ID of a QUIC connection carrying the first data flow.

In some embodiments, the second indication information may indicate an IP stream carrying the first data flow.

In some embodiments, the second indication information may include a stream ID of the IP stream carrying the first data flow.

In some embodiments, the first data flow may be carried in one or more IP streams. In this case, the second indication information may include a stream ID of an IP stream, or may include stream IDs of a plurality of IP streams. In the latter case, the stream IDs of the plurality of IP streams may constitute a stream ID group.

In some embodiments, the stream ID may indicate a stream range. The stream range indicates a range of the IP stream carrying the first data flow.

In some embodiments, a stream ID of each IP stream in an IP connection may be unique.

In some embodiments, the stream ID may be represented by one or more bits. In an example, the stream ID may be represented by 62 bits. In this case, a value range of the stream ID may be 0 to 2⁶²-1.

In some embodiments, stream ID information may be encoded in the form of a variable-length integer.

In some embodiments, a part of the stream ID may indicate an initiator of the IP stream corresponding to the stream ID. In an example, since an IP connection is used for data transmission between two parties, the lowest bit or the highest bit of the stream ID may indicate any one of the two parties. For example, when a value of the lowest bit of the stream ID is 0, the initiator of the IP stream may be a first party among the two parties; and, when a value of the lowest bit of the stream ID is 1, the initiator of the IP stream may be a second party among the two parties. In an example, the first party may be the server provider, and the second party may be the client. In an example, the first party may be the client, and the second party may be the server provider.

In some embodiments, the third indication information may indicate an IP frame carrying the first data flow.

In some embodiments, the third indication information may include a frame type of the IP frame carrying the first data flow.

In some embodiments, the IP frame may have a plurality of frame types. IP frames with different frame types may be used to carry different information. In an example, different frame types may correspond to different media stream types. In an example, different frame types may correspond to different types of media data packets.

In some embodiments, the first information is included in at least one of: a packet detection rule; or traffic detection information. It may be understood that the first information may also be included in other rules or information, which is not specifically limited in the embodiments of the present disclosure.

In some embodiments, the packet detection rule may include a first field. The first field is used to carry the first information. In an example, the first field may include at least one of: the first indication information, the second indication information, or the third indication information.

In some embodiments, the first information may be included in a packet filter set.

In some embodiments, the packet filter set may be used to identify one or more IP data flows.

In some embodiments, the packet filter set may include one or more packet filters. Each packet filter may be used to identify an IP data flow in at least one of an uplink or a downlink.

In some embodiments, the first field of the packet detection rule may correspond to the packet filter set. Then, the packet filter set may include at least one of: the first indication information, the second indication information, or the third indication information.

In some embodiments, the traffic detection information may include a second field. The second field is used to carry the first information. In an example, the first field may include at least one of: the first indication information, the second indication information, or the third indication information.

In some embodiments, an interface between the first network element 101 and the second network element 102 may be an N4 interface. In other words, the first network element 101 and the second network element 102 may interact via the N4 interface. In some embodiments, the first information may be sent by the first network element 101 to the second network element 102 via the N4 interface. In other words, the first information may be received by the second network element 102 via the N4 interface.

In some embodiments, the first information may further include indication information of the first QoS flow.

In some embodiments, the indication information of the first QoS flow may include identification information of the QoS flow.

In some embodiments, the identification information of the first QoS flow may be carried in the packet detection rule. In an example, in the packet detection rule, the identification information of the first QoS flow may include at least one of: a 5G QoS identifier (5QI), a non-standardized QoS flow identifier (QFI).

In some embodiments, the packet detection rule may further include at least one of: an N4 session ID or a rule ID. The N4 session ID may be used to identify the N4 session between the first network element 101 and the second network element 102. The rule ID may be a unique ID of the packet detection rule.

In some embodiments, the first network element 101 may send the first information to the second network element 102 via an N4 association setup procedure. In some embodiments, the first network element 101 may send an N4 association setup request message to the second network element 102. The N4 association setup request message may carry the first information.

In some embodiments, the first network element 101 may send the first information to the second network element 102 via an N4 session establishment procedure. In some embodiments, the first network element 101 may send an N4 session establishment request message to the second network element 102. The N4 session establishment request message may carry the first information.

In some embodiments, the first network element 101 may send the first information to the second network element 102 via an N4 session modification procedure. In some embodiments, the first network element 101 may send an N4 session modification request message to the second network element 102. The N4 session modification request message may carry the first information.

At S2103, the second network element 102 determines mapping of the multiplexed data flow.

In some embodiments, the second network element 102 may determine the first data flow from the multiplexed data flow, and determine that the first data flow is mapped to the first QoS flow.

In some embodiments, an operation of determining the first data flow from the multiplexed data flow may be based on the first information. In some embodiments, the second network element 102 may, according to the first information, identify the first data flow corresponding to the first information in the multiplexed data flow.

In some embodiments, the first data flow may include at least one of: an IP connection, an IP stream, or an IP frame. In an example, the first information may include a connection ID, and then the second network element 102 may determine an IP connection corresponding to the connection ID as the first data flow. In an example, the first information may include a connection ID and a stream ID, and then the second network element 102 may determine an IP stream corresponding to the stream ID in the IP connection corresponding to the connection ID as the first data flow. In an example, the first information may include a connection ID, a stream ID, and a frame type, and then the second network element 102 may determine an IP frame corresponding to the frame type in the IP stream corresponding to the connection ID and the stream ID as the first data flow.

At S2104, the second network element 102 sends third information to the first network element 101.

In some embodiments, the first network element 101 may receive the third information.

In some embodiments, the third information may be a response from the second network element 102 to the first information.

In some embodiments, the third information may be carried in an N4 association setup response message.

In some embodiments, the third information may be carried in an N4 session establishment response message.

In some embodiments, the third information may be carried in an N4 association modification response message.

At S2105, the first network element 101 sends fourth information to the third network element 103.

In some embodiments, the first network element 101 may continue to interact with the third network element 103 via the fourth information.

In some embodiments, the third network element 103 may receive the fourth information.

The communication method involved in the embodiments of the present disclosure may include at least one of S2101 to S2105. For example, S2102 may be implemented as an independent embodiment. For example, the combination of S2102 and S2103 may be implemented as an independent embodiment. It needs to be noted that possible independent embodiments including one or more of S2101 to S2105 are not limited thereto.

In some embodiments, at least two of S2101 to S2105 may be exchanged in order or performed synchronously. For example, S2103 and S2104 may be exchanged in order or performed simultaneously.

In some embodiments, S2101, S2103, S2104, and S2105 are optional, and in different embodiments, one or more of these steps may be omitted or replaced.

FIG. 2B is an interaction diagram of a communication method according to the embodiments of the present disclosure. The communication method involved in the embodiments of the present disclosure may be performed by the communication system 100. As shown in FIG. 2B, the communication method of the embodiments of the present disclosure includes the following steps at S2201 to S2203.

At S2201, a second network element 102 sends third information to a first network element 101.

In some embodiments, the first network element 101 may receive the third information.

In some embodiments, the third information may be used to request the first information from the first network element 101.

In some embodiments, the name of the third information is not limited, and for example, it may be rule request information, rule query information, etc.

In some embodiments, the interface between the first network element 101 and the second network element 102 may be an N4 interface. In other words, the first network element 101 and the second network element 102 may interact via the N4 interface. In some embodiments, the third information may be sent by the second network element 102 to the first network element 101 via the N4 interface. In other words, the third information may be received by the first network element 101 via the N4 interface.

In some embodiments, the second network element 102 may send the third information to the first network element 101 via an N4 association setup procedure. In some embodiments, the second network element 102 may send an N4 association setup request message to the first network element 101. The N4 association setup request message may carry the third information.

At S2202, the first network element 101 sends first information to the second network element 102.

For optional implementations of S2202, reference may be made to the optional implementations of S2102 in FIG. 2A and other related parts in the embodiments involved in FIG. 2A, and details will not be repeated here.

In some embodiments, the first information may be carried in an N4 association setup response message.

At S2203, the second network element 102 determines the mapping of a multiplexed data flow.

For optional implementations of S2203, reference may be made to the optional implementations of S2103 in FIG. 2A and other related parts in the embodiments involved in FIG. 2A, and details will not be repeated here.

The communication method involved in the embodiments of the present disclosure may include at least one of S2201 to S2203. For example, S2202 may be implemented as an independent embodiment. For example, the combination of S2202 and S2203 may be implemented as an independent embodiment. It needs to be noted that possible independent embodiments including one or more of S2201 to S2203 are not limited thereto.

In some embodiments, S2201 and S2203 are optional, and in different embodiments, one or more of these steps may be omitted or replaced.

In some embodiments, names of information are not limited to those specified in the embodiments. The terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, the terms such as "uplink", "physical uplink", etc. may be used interchangeably; terms such as "downlink", "physical downlink", etc. may be used interchangeably; and terms such as "sidelink", "sidelink communication", "direct link", "direct communication", etc. may be used interchangeably.

In some embodiments, the terms such as "radio", "wireless", "radio access network (RAN)", "access network (AN)", "RAN-based", etc. may be used interchangeably.

In some embodiments, the terms such as "time point", "time", "time position", etc. may be used interchangeably; and terms such as "period", "time interval", "time window", "window", "time", etc. may be used interchangeably.

In some embodiments, the terms such as "acquire", "obtain", "get", "receive", "transmit", "bidirectional transmission", "send and/or receive" may be used interchangeably, and they may be interpreted as receiving from another entity, obtaining from a protocol, obtaining via processing by itself, autonomously implementing, and other meanings.

In some embodiments, the terms such as "send", "report", "deliver", "transmit", "bidirectional transmission", "send and/or receive" may be used interchangeably.

In some embodiments, the terms such as "certain", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, determination or judgment may be performed using a value represented by 1 bit (0 or 1), or using boolean values represented by true or false, or by numerical comparison (e.g., comparison with a predetermined value), which is not limited herein.

In some embodiments, the terms such as "traffic", "flow", "stream", and "data flow" may be used interchangeably.

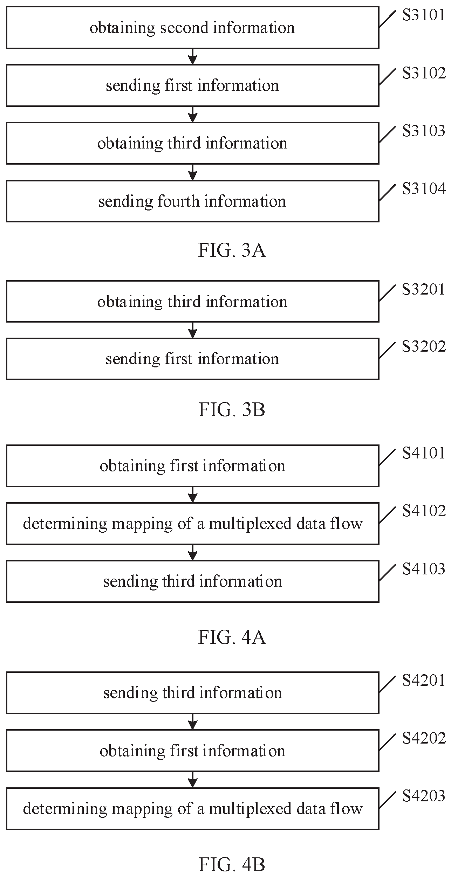

FIG. 3A is a flowchart of a communication method according to the embodiments of the present disclosure. The embodiments of the present disclosure relate to a communication method. The communication method is performed by the first network element 101. As shown in FIG. 3A, the above method includes the following steps at S3101 to S3104.

At S3101, second information is obtained.

For optional implementations of S3101, reference may be made to the optional implementations of S2101 in FIG. 2A and other related parts in the embodiments involved in FIG. 2A, and details will not be repeated here.

In some embodiments, the first network element 101 may receive the second information sent by the third network element 103, but is not limited thereto, and may also receive the second information sent by other subjects.

At S3102, first information is sent.

For optional implementations of S3102, reference may be made to the optional implementations of S2102 in FIG. 2A and other related parts in the embodiments involved in FIG. 2A, and details will not be repeated here.

In some embodiments, the first network element 101 may send the first information to the second network element 102, but is not limited thereto, and may also send the first information to other subjects.

At S3103, third information is obtained.

For optional implementations of S3103, reference may be made to the optional implementations of S2104 in FIG. 2A and other related parts in the embodiments involved in FIG. 2A, and details will not be repeated here.

In some embodiments, the first network element 101 may receive the third information sent by the second network element 102, but is not limited thereto, and may also receive the third information sent by other subjects.

At S3104, fourth information is sent.

For optional implementations of S3104, reference may be made to the optional implementations of S2105 in FIG. 2A and other related parts in the embodiments involved in FIG. 2A, and details will not be repeated here.

In some embodiments, the first network element 101 may send the fourth information to the third network element 103, but is not limited thereto, and may also send the fourth information to other subjects.

The communication method involved in the embodiments of the present disclosure may include at least one of S3101 to S3104. For example, S3102 may be implemented as an independent embodiment. It needs to be noted that possible independent embodiments including one or more of S3101 to S3104 are not limited thereto.

In some embodiments, S3101, S3103, and S3104 are optional, and in different embodiments, one or more of these steps may be omitted or replaced.

FIG. 3B is a flowchart of a communication method according to the embodiments of the present disclosure. The embodiments of the present disclosure relate to a communication method. The communication method is performed by the first network element 101. As shown in FIG. 3B, the above method includes the following steps at S3201 to S3202.

At S3201, third information is obtained.

For optional implementations of S3201, reference may be made to the optional implementations of S2201 in FIG. 2B and other related parts in the embodiments involved in FIG. 2B, and details will not be repeated here.

In some embodiments, the first network element 101 may receive the third information sent by the second network element 102, but is not limited thereto, and may also receive the third information sent by other subjects.

At S3202, first information is sent.

For optional implementations of S3202, reference may be made to the optional implementations of S2202 in FIG. 2B and other related parts in the embodiments involved in FIG. 2B, and details will not be repeated here.

In some embodiments, the first network element 101 may send the first information to the second network element 102, but is not limited thereto, and may also send the first information to other subjects.

The communication method involved in the embodiments of the present disclosure may include at least one of S3201 to S3202. For example, S3202 may be implemented as an independent embodiment. It needs to be noted that possible independent embodiments including one or more of S3201 to S3202 are not limited thereto.

In some embodiments, S3201 is optional, and in different embodiments, this step may be omitted or replaced.

FIG. 4A is a flowchart of a communication method according to the embodiments of the present disclosure. The embodiments of the present disclosure relate to a communication method. The communication method is performed by the second network element 102. As shown in FIG. 4A, the above method includes the following steps at S4101 to S4103.

At S4101, first information is obtained.

For optional implementations of S4101, reference may be made to the optional implementations of S2102 in FIG. 2A and other related parts in the embodiments involved in FIG. 2A, and details will not be repeated here.

In some embodiments, the second network element 102 may receive the first information sent by the first network element 101, but is not limited thereto, and may also receive the first information sent by other subjects.

At S4102, mapping of a multiplexed data flow is determined.

For optional implementations of S4102, reference may be made to the optional implementations of S2103 in FIG. 2A and other related parts in the embodiments involved in FIG. 2A, and details will not be repeated here.

In some embodiments, the mapping of the multiplexed data flow may be implemented based on the first information.

At S4103, third information is sent.

For optional implementations of S4103, reference may be made to the optional implementations of S2104 in FIG. 2A and other related parts in the embodiments involved in FIG. 2A, and details will not be repeated here.

In some embodiments, the second network element 102 may send the third information to the first network element 101, but is not limited thereto, and may also send the third information to other subjects.

The communication method involved in the embodiments of the present disclosure may include at least one of S4101 to S4103. For example, S4101 may be implemented as an independent embodiment. For example, the combination of S4101 and S4102 may be implemented as an independent embodiment. It needs to be noted that possible independent embodiments including one or more of S4101 to S4103 are not limited thereto.

In some embodiments, S4102 and S4103 are optional, and in different embodiments, one or more of these steps may be omitted or replaced.

FIG. 4B is a flowchart of a communication method according to the embodiments of the present disclosure. The embodiments of the present disclosure relate to a communication method. The communication method is performed by the second network element 102. As shown in FIG. 4B, the above method includes the following steps at S4201 to S4203.

At S4201, third information is sent.

For optional implementations of S4201, reference may be made to the optional implementations of S2201 in FIG. 2B and other related parts in the embodiments involved in FIG. 2B, and details will not be repeated here.

In some embodiments, the second network element 102 may send the third information to the first network element 101, but is not limited thereto, and may also send the third information to other subjects.

At S4202, first information is obtained.

For optional implementations of S4202, reference may be made to the optional implementations of S2202 in FIG. 2B and other related parts in the embodiments involved in FIG. 2B, and details will not be repeated here.

In some embodiments, the second network element 102 may receive the first information sent by the first network element 101, but is not limited thereto, and may also receive the first information sent by other subjects.

At S4203, the mapping of a multiplexed data flow is determined.

For optional implementations of S4203, reference may be made to the optional implementations of S2203 in FIG. 2B and other related parts in the embodiments involved in FIG. 2B, and details will not be repeated here.

In some embodiments, the mapping of the multiplexed data flow may be implemented based on the first information.

The communication method involved in the embodiments of the present disclosure may include at least one of S4201 to S4203. For example, S4202 may be implemented as an independent embodiment. For example, the combination of S4202 and S4203 may be implemented as an independent embodiment. It needs to be noted that possible independent embodiments including one or more of S4201 to S4203 are not limited thereto.

In some embodiments, S4201 and S4203 are optional, and in different embodiments, one or more of these steps may be omitted or replaced.

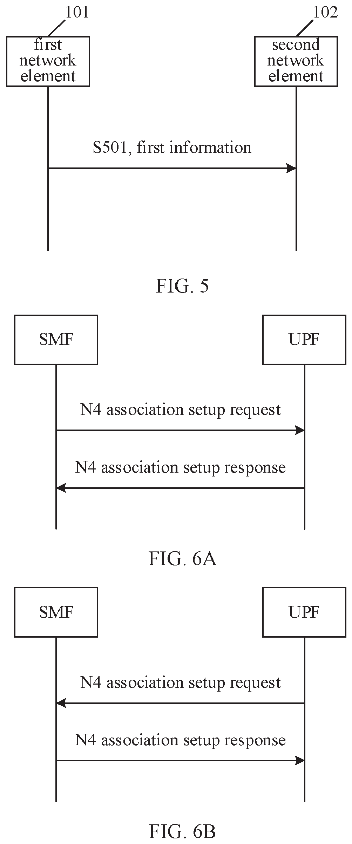

FIG. 5 is an interaction diagram of a communication method according to the embodiments of the present disclosure. As shown in FIG. 5, the embodiments of the present disclosure relate to a communication method. The above communication method includes the following step at S501.

At S501, a first network element 101 sends first information to a second network element 102.

For optional implementations of S501, reference may be made to the optional implementations of S2102 in FIG. 2A, S2202 in FIG. 2B, and other related parts in the embodiments involved in FIG. 2A and FIG. 2B, and details will not be repeated here.

Hereinafter, the embodiments of the present disclosure are exemplarily described via specific implementations.

In some embodiments, the packet filter set may be an enhanced packet filter set.

In some embodiments, for an IP PDU session, the packet filter set's support for a packet filter may be based on at least one of: a source/destination IP address or IPv6 prefix; a source/destination port number; a protocol ID of a protocol on an IP/next generation header type; a type of service (TOS) (IPv4)/traffic class (IPv6) and a mask; a stream label (IPv6); a security parameter index; a packet filter direction; a connection ID; a stream ID (the stream ID may be specified as a stream range); or a frame type.

In some embodiments, the enhanced packet filter set may be specifically set for a multiplexed data flow. In this case, the packet filter set specifically set for the multiplexed data flow may also be referred to as a multiplexed packet filter set. Of course, its name is not specifically limited in the embodiments of the present disclosure.

In some embodiments, the packet filter set may be included in a packet detection rule and transmitted from the SMF (that is, first network element) to the UPF (that is, second network element) on an N4 interface for execution, so it is also a part of the N4 rule. In addition to being carried in the packet filter set, information may also be carried to the UPF in other monitoring information of the packet detection rule.

In some embodiments, the SMF is responsible for indicating to the UPF how to detect user data traffic belonging to the packet detection rule. Other parameters in the packet detection rule describe how the UPF processes a data packet matching detection information.

In some embodiments, the key information of multiplexed data flow mapping may be carried via the packet filter set, or may be sent to the UPF in detection information other than the packet filter set. In an example, the connection ID, the stream ID, and the frame type may be enhanced within the packet filter set. In an example, the connection ID, the stream ID, and the frame type may be enhanced outside the packet filter set, for example, may be sent to the UPF in the detection information to perform traffic mapping.

In some embodiments, the SMF controls traffic detection on the UPF by providing detection information (that is, traffic detection information) for each packet detection rule. For PDU session types of IPv4 and/or IPv6, the detection information may include at least one of: CN channel information; a network instance; a QFI; an IP packet filter set; an application ID (the application ID may be an index of a series of application detection rules configured in the UPF); a fully qualified domain name (FQDN) filter for a domain name system (DNS) query message; a connection ID; a stream ID (the stream ID may be specified as a stream range); or a frame type.

In some embodiments, the traffic detection information for the PDU session sent by the SMF to the UPF may be associated with the connection ID and/or the stream ID and/or the frame type, for detection and routing of traffic on N6.

In some embodiments, in the case of an IP PDU session type, the connection ID and/or the stream ID and/or the frame type may be used by the UPF for traffic detection and routing.

In some embodiments, based on SMF instructions, the UPF may identify and route traffic/packets related to the connection ID and/or the stream ID and/or the frame type according to the protocol description in the packet detection rule (for example, QUIC protocol feature), thus obtaining mapped traffic pointed to by the connection ID and/or the stream ID and/or the frame type, and may send downlink traffic to the RAN (for example, via a DL GTP-U header).

In some embodiments, there may be a UPF local execution scheme, that is, a case where there is no flow detection indication information from the SMF.

In some embodiments, recognition of the traffic/packets related to the connection ID and/or the stream ID and/or the frame type may be implemented by the UPF or by detecting a header extension and/or header and/or payload.

In some embodiments, the connection ID and/or the stream ID and/or the frame type may be provided to the UPF in the packet detection rule.

In some embodiments, the connection ID and/or the stream ID and/or the frame type may be provided to the UPF in an N4 session establishment procedure or an N4 session modification procedure.

In some embodiments, the connection ID and/or the stream ID and/or the frame type may be provided to the UPF via an N4 reference point, and at the same time, an N4 session ID, a rule ID, and a QoS stream ID are also provided.

In some embodiments, a position of the enhanced packet filter set in the packet detection rule may be as shown in Table 1 below.

**Table 1: Example of some attributes of the packet detection rule**

| Attribute | | Description |
|---|---|---|
| N4 Session ID | | The N4 session ID identifies an N4 session associated with the PDR. |
| Rule ID | | The rule ID is a unique ID used to identify the rule. |
| Packet Detection Information | Packet Filter Set | The packet filter set is used in the QoS rule and the PDR to identify one or more (IP or Ethernet) packet flows. |
| | | The packet filter set may include one or more packet filters. |
| | | Each packet filter may be used for one of: the downlink direction, the uplink direction, and both the uplink and downlink directions. |
| | QoS Stream ID | QoS stream ID includes the value of the 5QI or non-standardized QFI. |
| | Connection ID | The connection ID indicates a connection. The connection ID is independently selected by an endpoint. Each endpoint selects the connection ID used by its opposite endpoint. |
| | | The main function of the connection ID is to ensure that addressing changes on a lower protocol layer (for example, UDP, IP) do not cause packets of a QUIC connection to be delivered to the wrong endpoint. |
| | | Each endpoint selects the connection ID via an implementation-specific method (and possibly a deployment-specific method). The implementation-specific method allows a packet with the connection ID to be routed to the endpoint and recognized by the endpoint after being received. |
| | Stream ID | Stream in the connection may be identified by a numerical value. The numerical value may be referred to as a stream ID. The stream ID is an integer represented by 62 bits (0 to 2⁶²-1). The stream IDs of all streams in a connection are unique. |
| | | The stream ID is encoded as a variable-length integer. |
| | | A QUIC endpoint may not reuse a stream ID within a connection. |
| | | The lowest bit of the stream ID may identify the initiator of the stream. |
| | | The stream ID of a client-initiated stream may be an even number (this bit is set to 0), and the stream ID of a server-initiated stream may be an odd number (this bit is set to 1). |
| | | The stream ID may be encoded and provided in a header/extension header for multiplexed data flow mapping in the UPF. |
| | | The stream ID may be specified as a stream range. |
| | Frame Type | A frame is a structured protocol information unit. There may be a plurality of frame types. Each frame type carries different information. The frame is included in a QUIC packet. |
| | | The frame type is used to identify the type of the frame, and may correspond to different media stream types or different types of media data packets. |

In some embodiments, when the 5th generation core (5GC) determines to support specific mapping for a multiplexed SDF (detection based on the connection ID and/or the stream ID and/or the frame type for different QoS requirements or routing requirements or DSCP mapping requirements), the SMF sends the connection ID and/or the stream ID and/or the frame type to the UPF in the PDR (for example, provided in the packet filter set, or provided in other parameters in the PDR used to describe how the UPF processes a data packet matching the detection information).

In some embodiments, the UPF may receive the PDR sent by the SMF, where the PDR includes the connection ID and/or the stream ID and/or the frame type. The UPF may perform detection and mapping on the data flow received on the N6 interface, and may perform detection and mapping of corresponding granularities based on the connection ID and/or the stream ID and/or the frame type.

In some embodiments, when the SMF indicates the UPF to apply the multiplexed data flow mapping, the UPF may identify a related traffic/data packet according to the connection ID and/or the stream ID and/or the frame type in the PDR.

In some embodiments, in a case where the SMF provides the traffic detection information to the UPF, the UPF may use the connection ID and/or the stream ID and/or the frame type for traffic detection and routing.

In some embodiments, the N4 association setup procedure is used to establish an N4 association between the SMF and the UPF, so that the SMF uses resources of the UPF. During this procedure, supported functions may be exchanged between the SMF and the UPF.

FIG. 6A is an interaction diagram of an exemplary implementation of a communication method according to the embodiments of the present disclosure. As shown in FIG. 6A, the establishment of the N4 association may be initiated by the SMF. In some embodiments, the SMF initiates the N4 association setup procedure to request establishment of the N4 association with the UPF. In some embodiments, after receiving the N4 association setup request, the UPF may send the N4 association setup response.

FIG. 6B is an interaction diagram of an exemplary implementation of a communication method according to the embodiments of the present disclosure. As shown in FIG. 6B, the establishment of the N4 association may be initiated by the UPF. In some embodiments, the UPF may initiate the N4 association setup procedure to request establishment of the N4 association with the SMF. In some embodiments, after receiving the N4 association setup request, the SMF may send the N4 association setup response.

In some embodiments, the N4 session establishment procedure may be used to create an initial N4 session context for the PDU session at the UPF. The SMF allocates a new N4 session context and provides it to the UPF. The N4 session ID is stored on the SMF and the UPF, and is used to identify the N4 session context during the interaction between the SMF and the UPF. The SMF also stores the association between the N4 session ID and the PDU session for the UE.

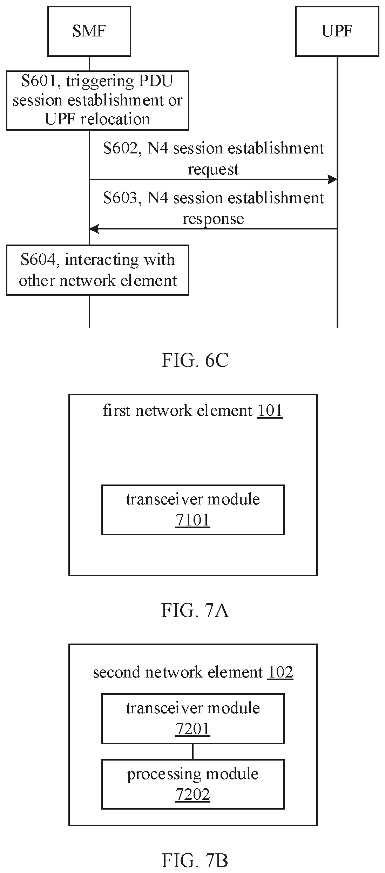

FIG. 6C is an interaction diagram of an exemplary implementation of a communication method according to the embodiments of the present disclosure. As shown in FIG. 6C, the N4 session establishment procedure may include the following steps at S601 to S604.

At S601, the SMF receives a trigger to establish a new PDU session or to change the UPF for an established PDU session.

At S602, the SMF sends an N4 session establishment request message to the UPF, in which the message includes structured control information, and the control information defines a behavior of the UPF.

At S603, the UPF sends an N4 session establishment response message as a response, in which the message includes any information that the UPF needs to provide to the SMF as a response to received control information.

At S604, the SMF interacts with a network element that triggers an N4 session establishment procedure (for example, an AMF or a PCF).

In the embodiments of the present disclosure, some or all steps and optional implementations thereof may be arbitrarily combined with some or all steps in other embodiments, and may also be arbitrarily combined with optional implementations of other embodiments.

The embodiments of the present disclosure also provide a communication device for implementing any one of the above methods. For example, the embodiments of the present disclosure also provide another communication device, including units or modules for implementing the steps performed by the network device in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor and the remaining part implemented in the form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigurable. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or modules. In addition, the hardware circuit may be designed specifically for artificial intelligence and may be understood as an ASIC, such as a neural network processing unit (NPU), a tensor processing unit (TPU), or deep learning processing unit (DPU).

FIG. 7A is a block diagram of a first network element according to the embodiments of the present disclosure. s shown in FIG. 7A, the first network element 101 may include a transceiver module 7101. In some embodiments, the transceiver module 7101 may be configured to: send first information, in which the first information indicates a first data flow in a multiplexed data flow, and the first data flow corresponds to a first QoS flow. Optionally, the transceiver module 7101 may be configured to perform at least one of the communication steps (for example, S2101, S2102, S2104, S2105, S2201, or S2202) of sending and/or receiving performed by the first network element 101 in any one of the above methods, and details will not be repeated here.

FIG. 7B is a block diagram of a second network element according to the embodiments of the present disclosure. As shown in FIG. 7B, the second network element 102 may include at least one of: a transceiver module 7201 or a processing module 7202. In some embodiments, the transceiver module 7201 may be configured to: receive first information, in which the first information indicates a first data flow in a multiplexed data flow, and the first data flow corresponds to a first QoS flow. Optionally, the transceiver module 7201 may be configured to perform at least one of the communication steps (for example, S2102, S2104, S2201, or S2202) of sending and/or receiving performed by the second network element 102 in any one of the above methods, and details will not be repeated here. Optionally, the processing module 7202 may be configured to perform at least one of the other steps (for example, S2103, or S2203) other than the communication steps of sending and/or receiving performed by the second network element 102 in any one of the above methods, and details will not be repeated here.

In some embodiments, the transceiver module may include a sending module and/or a receiving module. The sending module and the receiving module may be separate or integrated together. Optionally, the transceiver module may be interchanged with a transceiver.

In some embodiments, the processing module may be one module or may include a plurality of sub-modules. Optionally, the plurality of sub-modules respectively performs all or part of the steps that the processing module needs to perform. Optionally, the processing module may be interchanged with a processor.

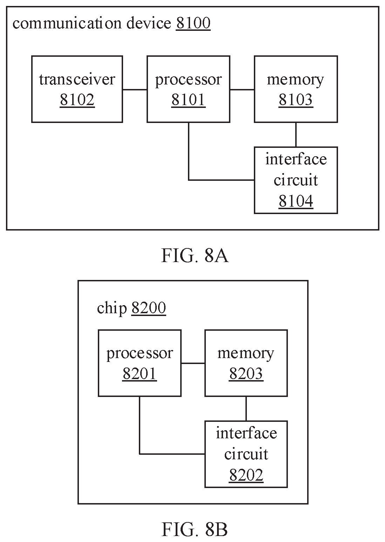

FIG. 8A is a block diagram of a communication device according to the embodiments of the present disclosure. A communication device 8100 may be a network device (for example, an access network device, a core network device, etc.), or may be a chip, a chip system, or a processor that supports the network device in implementing any one of the above methods. The communication device 8100 may be used to implement the methods described in the above method embodiments, and details may be referred to the descriptions in the above method embodiments.

As shown in FIG. 8A, the communication device 8100 includes one or more processors 8101. The processor 8101 may be a general-purpose processor or a dedicated processor, such as, a baseband processor and a central processor. The baseband processor may be used to process communication protocols and communication data, and the central processor may be used to control a communication device (such as a base station, a baseband chip, a terminal, a terminal chip, a DU or a CU, etc.), execute programs, and process data of the program. Optionally, the communication device 8100 is used to perform any one of the above methods. Optionally, the one or more processors 8101 are used to invoke instructions to cause the communication device 8100 to perform any one of the above methods.

In some embodiments, the communication device 8100 further includes one or more transceivers 8102. When the communication device 8100 includes one or more transceivers 8102, the transceiver 8102 performs at least one of the communication steps (for example, S2101, S2102, S2104, S2105, S2201, or S2202, but not limited thereto) of sending and/or receiving in the above methods, and the processor 8101 performs at least one of the other steps (for example, S2103 or S2203, but not limited thereto). In optional embodiments, the transceiver may include a receiver and/or a transmitter, and the receiver and the transmitter may be separate or integrated together. Optionally, the terms such as transceiver, transceiving unit, transceiving machine, transceiving circuit, interface circuit, and interface may be used interchangeably, the terms such as transmitter, transmitting unit, transmitting machine, and transmitting circuit may be used interchangeably, and the terms such as receiver, receiving unit, receiving machine, and receiving circuit may be used interchangeably.

In some embodiments, the communication device 8100 further includes one or more memories 8103 for storing data. Optionally, all or part of the memory 8103 may also be outside the communication device 8100. In optional embodiments, the communication device 8100 may include one or more interface circuits 8104. Optionally, the interface circuit 8104 is connected to the memory 8103, and the interface circuit 8104 may be used to receive data from the memory 8103 or other devices, and may be used to send the data to the memory 8103 or other devices. For example, the interface circuit 8104 may read the data stored in the memory 8103 and send the data to the processor 8101.

The communication device 8100 in the description of the above embodiments may be a network device or a terminal, but the scope of the communication device 8100 described in the disclosure is not limited thereto, and the structure of the communication device 8100 may not be limited by FIG. 8A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 8B is a block diagram of a chip according to the embodiments of the present disclosure. For a case where the communication device 8100 may be a chip or a chip system, reference may be made to the block diagram of a chip 8200 shown in FIG. 8B, but is not limited thereto.

The chip 8200 includes one or more processors 8201. The chip 8200 is used to perform any one of the above methods.

In some embodiments, the chip 8200 further includes one or more interface circuits 8202. Optionally, the terms such as interface circuit, interface, and transceiving pin may be used interchangeably. In some embodiments, the chip 8200 further includes one or more memories 8203 for storing data. Optionally, all or part of the memory 8203 may be outside the chip 8200. Optionally, the interface circuit 8202 is connected to the memory 8203, and the interface circuit 8202 may be used to receive data from the memory 8203 or other devices, and the interface circuit 8202 may be used to send the data to the memory 8203 or other devices. For example, the interface circuit 8202 may read the data stored in the memory 8203 and send the data to the processor 8201.

In some embodiments, the interface circuit 8202 performs at least one of the communication steps (for example, S2101, S2102, S2104, S2105, S2201, or S2202, but not limited thereto) of sending and/or receiving in the above methods. The interface circuit 8202 performing the communication steps of sending and/or receiving in the above methods means, for example, that the interface circuit 8202 performs data interaction among the processor 8201, the chip 8200, the memory 8203, or transceiving devices. In some embodiments, the processor 8201 performs at least one of other steps (for example, S2103, or S2203, but not limited thereto).

The modules and/or devices described in the various embodiments such as virtual apparatuses, physical apparatuses, and chips may be arbitrarily combined or separated according to the situation. Optionally, part or all of the steps may also be performed cooperatively by a plurality of modules and/or devices, which is not limited herein.

The embodiments of the present disclosure also provide a storage medium for storing instructions. When the instructions are running on the communication device 8100, the communication device 8100 is caused to perform any one of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The embodiments of the present disclosure also provide a program product. When the program product is executed by the communication device 8100, the communication device 8100 is caused to perform any one of the above methods. Optionally, the program product is a computer program product.

The embodiments of the present disclosure also provide a computer program. When the computer program is running on a computer, the computer is caused to perform any one of the above methods.

Other embodiments of the present disclosure will be apparent to those skilled in the art from consideration of the specification and practice of the present disclosure disclosed here. This disclosure is intended to cover any variations, uses, or adaptations of the present disclosure following the general principles of the disclosure and including common knowledge or conventional technical means in the art that are not disclosed herein. It is intended that the specification and examples be considered as exemplary only, with a true scope and spirit of the present disclosure being indicated by the following claims.

It should be understood that the present disclosure is not limited to the precise structure described above and shown in attached drawings, and various modifications and alterations may be made without going beyond the scope of the present disclosure. Therefore, the protection scope of the disclosure shall be subject to claims.

## Claims

1. A communication method, performed by a first network element, comprising:
sending first information, wherein the first information indicates a first data flow in a multiplexed data flow, and the first data flow corresponds to a first quality of service (QoS) flow.

2. The method of claim 1, wherein the first information comprises at least one of:
first indication information, indicating an Internet protocol (IP) connection carrying the first data flow;
second indication information, indicating an IP stream carrying the first data flow; or
third indication information, indicating an IP frame carrying the first data flow.

3. The method of claim 2, wherein the first indication information comprises a connection identifier (ID) of the IP connection, the second indication information comprises a stream ID of the IP stream, and the third indication information comprises a frame type of the IP frame.

4. The method of claim 2 or 3, wherein the first information further comprises indication information of the first QoS flow.

5. The method of any one of claims 1 to 4, wherein the first information is comprised in at least one of:
a packet detection rule; or
traffic detection information.

6. The method of claim 5, wherein the first information is comprised in a packet filter set of the packet detection rule.

7. The method of any one of claims 1 to 6, wherein the first information is sent to a second network element via an N4 interface;
wherein the first network element is configured to implement packet data unit (PDU) session management, and the second network element is configured to implement QoS processing.

8. The method of claim 7, wherein the first information is sent via one of:
an N4 association setup procedure;
an N4 session establishment procedure; or
an N4 session modification procedure.

9. The method of any one of claims 1 to 8, further comprising:
receiving second information, wherein the second information indicates QoS information.

10. The method of claim 9, wherein the second information comprises at least one of:
a QoS requirement, indicating a mapping requirement of the multiplexed data flow; or
a QoS rule, indicating a mapping policy of the multiplexed data flow.

11. A communication method, performed by a second network element, comprising:
receiving first information, wherein the first information indicates a first data flow in a multiplexed data flow, and the first data flow corresponds to a first quality of service (QoS) flow.

12. The method of claim 11, wherein the first information comprises at least one of:
first indication information, indicating an Internet protocol (IP) connection carrying the first data flow;
second indication information, indicating an IP stream carrying the first data flow; or
third indication information, indicating an IP frame carrying the first data flow.

13. The method of claim 12, wherein the first indication information comprises a connection identifier (ID) of the IP connection, the second indication information comprises a stream ID of the IP stream, and the third indication information comprises a frame type of the IP frame.

14. The method of claim 12 or 13, wherein the first information further comprises indication information of the first QoS flow.

15. The method of any one of claims 11 to 14, wherein the first information is comprised in at least one of:
a packet detection rule; or
traffic detection information.

16. The method of claim 15, wherein the first information is comprised in a packet filter set of the packet detection rule.

17. The method of any one of claims 11 to 16, wherein the first information is received from a first network element via an N4 interface;
wherein the first network element is configured to implement packet data unit (PDU) session management, and the second network element is configured to implement QoS processing.

18. The method of claim 17, wherein the first information is sent via one of:
an N4 association setup procedure;
an N4 session establishment procedure; or
an N4 session modification procedure.

19. The method of any one of claims 11 to 18, further comprising:
determining, according to the first information, the first data flow from the multiplexed data flow; and
determining that the first data flow is mapped to the first QoS flow.

20. The method of claim 19, wherein the first data flow comprises at least one of: an IP connection, an IP stream, or an IP frame.

21. A communication method, performed by a core network, wherein the core network comprises a first network element and a second network element, and
the method comprises:
sending, by the first network element, first information to the second network element, wherein the first information indicates a first data flow in a multiplexed data flow, and the first data flow corresponds to a first quality of service (QoS) flow.

22. A first network element, comprising:
a transceiver module, configured to send first information, wherein the first information indicates a first data flow in a multiplexed data flow, and the first data flow corresponds to a first quality of service (QoS) flow.

23. A second network element, comprising:
a transceiver module, configured to receive first information, wherein the first information indicates a first data flow in a multiplexed data flow, and the first data flow corresponds to a first quality of service (QoS) flow.

24. A first network element, comprising:
one or more processors; and
a memory for storing instructions,
wherein the instructions, when executed by the first network element, cause the first network element to implement the method of any one of claims 1 to 10.

25. A second network element, comprising:
one or more processors; and
a memory for storing instructions,
wherein the instructions, when executed by the second network element, cause the second network element to implement the method of any one of claims 11 to 20.

26. A communication system, comprising a first network element and a second network element;
wherein the first network element is configured to implement the method of any one of claims 1 to 10, and the second network element is configured to implement the method of any one of claims 11 to 20.

27. A storage medium for storing instructions that, when executed on a communication device, cause the communication device to implement the method of any one of claims 1 to 21.
